# EUROPEAN PATENT APPLICATION

(11) **EP 4 596 096 A2**
(43) Date of publication of application: **06.08.2025**
(21) Application number: 25151072.3
(22) Date of filing: 09.01.2025
(51) Int. Cl.: B01F 25/312, B01F 25/314, B01F 25/433, A01C 5/06, B24C 1/04, B24C 5/04, B24C 7/00

(54) **LIQUID JET PROCESSING HEADS WITH ADDITIVE INJECTION CAPABILITIES**

(30) Priority: 09.01.2024 US 202463619132 P
(71) Applicant: Hypertherm, Inc., Hanover, NH 03755 (US)
(72) Inventor: Osterhouse, David, New Brighton, 55112 (US); Garg, Sanjay, Hanover, 03755 (US); Popper, Matthew, Toronto, M5X 1B8 (CA); Martel, Jeff, Toronto, M5X 1B8 (CA)
(74) Representative: Barker Brettell LLP

(57) **Abstract**

An additive supply apparatus for a high-pressure liquid jet system is provided. The additive supply apparatus includes a processing head (100) having a central bore (102) extending along a central longitudinal axis (A) of the processing head from a proximal end (104) to a distal end (106). The additive supply apparatus also includes a first aperture (108) fluidly connected to the central bore to supply a fluid jet (114) to flow longitudinally within the processing head, a second aperture (110) fluidly connected to the central bore to supply a flow of gas (116) to the processing head, and a third aperture (112) fluidly connected to the central bore to supply a flow of an additive fluid (118) to the processing head. The additive supply apparatus further includes a fluid mixing insert (120) disposed within the central bore and fluidly connected to the first, second and third apertures, and a mixing tube (122) in fluid communication with and downstream from the fluid mixing insert.

## Description

### CROSS REFERENCE TO RELATED APPLICATION

This application claims the benefit of and priority to U.S. Provisional Patent Application No. 63/619,132 filed on January 9, 2024, the entire content of which is owned by the assignees of the instant application and incorporated herein by reference in its entirety.

### TECHNICAL FIELD

The present invention generally relates to an additive supply processing head for a high-pressure liquid jet system.

### BACKGROUND

Ultra-high-pressure (hereinafter referred to as "UHP") liquid jets, such as waterjets, and solid abrasive injection liquid jets, such as waterjet, are established industrial cutting solutions for static systems and/or tables. These liquid jet systems typically employ a single fluid (e.g., water) to form the jet and process a given workpiece in controlled environments/settings.

Even though dynamic applications of liquid jets can introduce new opportunities, they also have challenges. For example, they can be applied in an agricultural setting, where it is advantageous to inject a second distinct liquid and/or mixture (e.g., fresh air, fertilizer, introduced gases, blend of agricultural inputs, etc.) into an UHP waterjet. Inclusion of a beneficial liquid (e.g., liquid fertilizer, fungicide, herbicide, lime, fungus, bacteria, insecticide, biologicals, slurry, mixture of liquid and fine granules, soil amendments, micro-nutrients, nutrients, etc.) into a water jet can enhance/improve the output of the operation, but such a beneficial liquid may be incompatible with the pressurization required to generate the water jet. In general, injection of a second distinct and potentially sensitive liquid into an existing, already-formed UHP waterjet presents unique challenges that have not been encountered before in traditional pure water jet and abrasive waterjet systems and technology (e.g., in industrial cutting). One of the challenges is that droplet formation of the injected liquid can cause unsteady flow perturbations that can degrade the cutting ability of the combined jet. In addition, compressible effects of the air surrounding the liquids can magnify the perturbations, further degrading the cutting ability. At the same time, insufficient air surrounding the liquids can induce phase changes in the liquids and cause subsequent vapor cavity collapse that can also degrade the cutting ability and thus overall performance of the system.

Therefore, there is a need for systems and methods that can inject additive inputs into an UHP fluid jet without perturbing fluid flow and/or degrading cutting ability.

### SUMMARY

Embodiments of the invention include an UHP fluid jet processing head that is configured to inject one or more agricultural inputs (e.g., liquid fertilizer, fresh air, introduced gases, pesticides, etc.) into an UHP fluid jet to combine well with the jet. In some embodiments, the processing head is configured to control the combination and mixing of three different fluid streams such that they leave the processing head with sufficient velocity and focus to cut effectively. In an agricultural application, for example, this processing head allows the fertilizer to be embedded substantially in the bottom of a cut in the soil made by the fluid jet prior to seed implantation. Alternatively, this processing head can be used to simply inject a liquid mixture, regardless of seeding, such as in a side-dressing application. This processing head can even be used in instances involving post seed implantation. In general, this processing head can be used in any application where it would be advantageous to incorporate a second fluid into a fluid jet while minimizing degradation of the cutting ability of the jet.

In one aspect, an additive supply apparatus for a high-pressure liquid jet system is provided. The additive supply apparatus comprises a processing head including a central bore extending along a central longitudinal axis of the processing head from a proximal end to a distal end. The additive supply apparatus also includes a first aperture disposed on the processing head at the proximal end. The first aperture is substantially aligned with the central longitudinal axis and fluidly connected to the central bore to supply a fluid jet to flow longitudinally within the processing head. The additive supply apparatus additionally includes a second aperture disposed on the process head and fluidly connected to the central bore, where the second aperture configured to supply a flow of gas to the processing head, and a third aperture disposed on the processing head and fluidly connected to the central bore, where the third aperture configured to supply a flow of an additive fluid to the processing head. The additive supply apparatus further includes a fluid mixing insert disposed within the central bore and fluidly connected to the first, second and third apertures and a mixing tube disposed within the central bore in fluid communication with and downstream from the fluid mixing insert.

In another aspect, a method of mixing fluids within a high-pressure liquid jet processing head is provided. The processing head comprises a central bore extending along a central longitudinal axis of the processing head from a proximal end to a distal end. The method includes flowing a high-pressure liquid through an orifice nozzle disposed at the proximal end of the processing head to generate a liquid jet for supply to the central bore. The orifice nozzle defines a first aperture substantially aligned with the central longitudinal axis and fluidly connected to the central bore. The method also includes introducing, via a second aperture, a flow of gas to the central bore. The second aperture is located downstream of the orifice nozzle and fluidly connected to the central bore. The method further includes introducing, via a third aperture, a flow of additive fluid to the central bore. The third aperture is located downstream from the second aperture and fluidly connected to the central bore.

In yet another aspect, a fluid mixing insert for a high-pressure liquid jet processing head is provided. The fluid mixing insert comprises a body configured to be disposed within a central bore of the processing head. The body defines a central longitudinal axis extending from a proximal end to a distal end of the body. The body includes a central flow channel extending along the central longitudinal axis from the proximal end to the distal end. The central flow channel configured to conduct a liquid jet therethrough. The body also includes a first annular groove disposed substantially circumferentially about the proximal end of the body and shaped to receive a gas flow, a plurality of gas introduction apertures fluidly connecting the first annular groove to the central flow channel to introduce the gas flow from the first annular groove to the central flow channel, and a second annular groove disposed substantially circumferentially about the body downstream from the first annular groove. The second annular groove is shaped to receive an additive fluid flow. The body further includes a plurality of flow regions disposed into the body and in fluid communication with the second annular groove. The plurality of flow regions are adapted to complement surfaces of the central bore of the processing head to form a plurality of auxiliary flow channels configured to direct the additive fluid flow longitudinally toward the distal end while substantially separating the additive fluid flow from the liquid jet and the gas flow in the central flow channel.

Any of the above aspects can include one or more of the following features. In some embodiments, the additive fluid comprises at least one of a fertilizer, a pesticide, or a fungicide. In some embodiments, the gas comprises air. In some embodiments, the fluid jet comprises water conducted at a high velocity.

In some embodiments, the mixing tube defines a substantially conical section and a substantially tubular focusing channel, the substantially conical section located upstream from the focusing channel and configured to radially guide the additive fluid to flow inward to mix with a combination of the liquid jet and the gas. The conical section can be shaped to induce the additive fluid to flow as a wall film as the additive fluid approaches the liquid jet and the gas. In some embodiments, the conical section is not completely circumferential around the central longitudinal axis. In some embodiments, the focusing channel is configured to mix the liquid jet, the gas, and the additive fluid to create a substantially heterogeneous mixture. A diameter of the focusing channel can be between about 10 times and about 30 times larger than a diameter of the liquid jet. The focusing channel can be between about 1 inch and about 4 inches in length.

In some embodiments, the fluid mixing insert includes a central flow channel and a plurality of axial flow regions surrounding the central flow channel. The central flow channel is configured to conduct the combination of the liquid jet and the gas longitudinally toward the mixing tube. In some embodiments, the axial flow regions of the fluid mixing insert are adapted to complement surfaces of the central bore of the processing head to form a plurality of auxiliary flow channels configured to direct the additive fluid to flow longitudinally toward the conical section of the mixing tube while separating the combination of the additive fluid from the liquid jet and the gas flow in the central flow channel. In some embodiments, the fluid mixing insert further includes (i) a first annular groove fluidly connected to the second aperture and configured to meter the flow of gas into the central flow channel, and (ii) a second annular groove fluidly connected to the third aperture and configured to meter the flow of the additive fluid into the plurality of axial flow regions. In some embodiments, at least one of the central flow channel of the fluid mixing insert or the focusing channel of the mixing tube has a diameter between about 10 times and about 30 times larger than a diameter of the liquid jet.

In some embodiments, at least one of the second aperture or the third aperture is configured to conduct the corresponding gas or additive fluid in a direction substantially perpendicular to the central longitudinal axis. In some embodiments, the second aperture and the third aperture are axially spaced from one another along the longitudinal axis by at least about 0.175 inches, and wherein the third aperture is located downstream of the second aperture.

In some embodiments, the additive supply apparatus further includes a body for encapsulating the fluid mixing insert, the mixing tube and an orifice nozzle into a single assembly, wherein the body defines the central bore. In some embodiments, the central bore of the body is stepped in configuration for engaging, spacing and orienting the fluid mixing insert, the mixing tube and an orifice nozzle relative to each other within the body. In some embodiments, the orifice nozzle is fluidly connected to the first aperture and configured to convert a flow of high-pressure liquid into the fluid jet with a high velocity. In some embodiments, the high velocity fluid jet is collimated.

In some embodiments, the flow of gas is introduced via the second aperture at a sufficiently high rate to prevent backflow of the additive fluid toward upstream. In some embodiments, a flow rate of the flow of gas introduced via the second aperture is controlled relative to a flow rate of the liquid jet to induce the flow of gas in a pattern that approximates Couette flow. In some embodiments, the flow of gas from the second aperture is conducted to an axial channel with a diameter about 10 times to about 30 times larger than a diameter of the liquid jet, thereby inducing the gas to flow at a sufficiently high velocity to form a pattern that approximates the Couette flow between a surface of liquid jet flowing through the axial channel and surrounding stationary walls of the axial channel.

In some embodiments, the additive fluid is introduced to the gas and the liquid jet as a wall film via a conical section of a mixing tube of the high-pressure liquid jet head. The mixing tube is located downstream from the first, second and third apertures. In some embodiments, the additive fluid flows from the third aperture to the conical section around a full diameter of the conical section to join a combined flow of the gas and the liquid jet in a substantially axisymmetric flow pattern. In some embodiments, the flow of gas is introduced via the second aperture at a sufficiently high velocity to induce Kelvin-Helmholtz instabilities and cause subsequent removal and atomization of droplets of the additive fluid flow from the wall film. In some embodiments, the liquid jet, the flow of gas, and the flow of additive fluid are mixed in a focusing channel of the mixing tube.

In some embodiments, a flow rate of the additive fluid introduced via the third aperture is about 0.5 liters per minute. In some embodiments, a flow rate of the additive fluid is controlled by manipulating one of: restriction of the flow of gas, an upstream pressure of the flow of gas, a pressure of the flow of the additive fluid, or a pressure of the liquid jet. In some embodiments, manipulating restriction of the flow of gas into the processing head comprises coupling a flow restriction device to the flow of gas. The flow restriction device can comprise at least one of a hose of a select length and a select diameter, a pressure regulation apparatus, a valve, or an aperture. In some embodiments, manipulating the pressure of the of the additive fluid comprises maintaining the additive fluid in an upstream reservoir at atmospheric pressure by adjusting at least one of a size of the liquid jet, a size and shape of an inlet channel of the flow of gas or a size and shape of an inlet channel of the flow of additive fluid.

For example, the invention can be defined as set out in the below numbered clauses:
1. An additive supply apparatus for a high-pressure liquid jet system, the additive supply apparatus comprising:
   a processing head including a central bore extending along a central longitudinal axis of the processing head from a proximal end to a distal end;
   a first aperture disposed on the processing head at the proximal end, the first aperture substantially aligned with the central longitudinal axis and fluidly connected to the central bore to supply a fluid jet to flow longitudinally within the processing head;
   a second aperture disposed on the process head and fluidly connected to the central bore, the second aperture configured to supply a flow of gas to the processing head;
   a third aperture disposed on the processing head and fluidly connected to the central bore, the third aperture configured to supply a flow of an additive fluid to the processing head;
   a fluid mixing insert disposed within the central bore and fluidly connected to the first, second and third apertures; and
   a mixing tube disposed within the central bore in fluid communication with and downstream from the fluid mixing insert.
2. The additive supply apparatus of clause 1, wherein the additive fluid comprises at least one of a fertilizer, a pesticide, or a fungicide.
3. The additive supply apparatus of clause 1, wherein the gas comprises air.
4. The additive supply apparatus of clause 1, wherein the fluid jet comprises water conducted at a high velocity.
5. The additive supply apparatus of clause 1, wherein at least one of the second aperture or the third aperture is configured to conduct the corresponding gas or additive fluid in a direction substantially perpendicular to the central longitudinal axis.
6. The additive supply apparatus of clause 1, wherein the mixing tube defines a substantially conical section and a substantially tubular focusing channel, the substantially conical section located upstream from the focusing channel and configured to radially guide the additive fluid to flow inward to mix with a combination of the liquid jet and the gas.
7. The additive supply apparatus of clause 6, wherein the conical section is shaped to induce the additive fluid to flow as a wall film as the additive fluid approaches the liquid jet and the gas.
8. The additive supply apparatus of clause 6, wherein the conical section is not completely circumferential around the central longitudinal axis.
9. The additive supply apparatus of clause 6, wherein the focusing channel is configured to mix the liquid jet, the gas, and the additive fluid to create a substantially heterogeneous mixture.
10. The additive supply apparatus of clause 6, wherein a diameter of the focusing channel is between about 10 times and about 30 times larger than a diameter of the liquid jet.
11. The additive supply apparatus of clause 6, wherein the focusing channel is between about 1 inch and about 4 inches in length.
12. The additive supply apparatus of clause 6, wherein the fluid mixing insert includes a central flow channel and a plurality of axial flow regions surrounding the central flow channel, the central flow channel configured to conduct the combination of the liquid jet and the gas longitudinally toward the mixing tube.
13. The additive supply apparatus of clause 12, wherein the axial flow regions of the fluid mixing insert are adapted to complement surfaces of the central bore of the processing head to form a plurality of auxiliary flow channels configured to direct the additive fluid to flow longitudinally toward the conical section of the mixing tube while separating the combination of the additive fluid from the liquid jet and the gas flow in the central flow channel.
14. The additive supply apparatus of clause 12, wherein the fluid mixing insert further includes (i) a first annular groove fluidly connected to the second aperture and configured to meter the flow of gas into the central flow channel, and (ii) a second annular groove fluidly connected to the third aperture and configured to meter the flow of the additive fluid into the plurality of axial flow regions.
15. The additive supply apparatus of clause 12, wherein at least one of the central flow channel of the fluid mixing insert or the focusing channel of the mixing tube has a diameter between about 10 times and about 30 times larger than a diameter of the liquid jet.
16. The additive supply apparatus of clause 1, wherein the second aperture and the third aperture are axially spaced from one another along the longitudinal axis by at least about 0.175 inches, and wherein the third aperture is located downstream of the second aperture.
17. The additive supply apparatus of clause 1, further comprising a body for encapsulating the fluid mixing insert, the mixing tube and an orifice nozzle into a single assembly, wherein the body defines the central bore.
18. The additive supply apparatus of clause 17, wherein the central bore of the body is stepped in configuration for engaging, spacing and orienting the fluid mixing insert, the mixing tube and an orifice nozzle relative to each other within the body.
19. The additive supply apparatus of clause 17, wherein the orifice nozzle is fluidly connected to the first aperture and configured to convert a flow of high-pressure liquid into the fluid jet with a high velocity.
20. The additive supply apparatus of clause 19, wherein the high velocity fluid jet is collimated.
21. A method of mixing fluids within a high-pressure liquid jet processing head comprising a central bore extending along a central longitudinal axis of the processing head from a proximal end to a distal end, the method comprising:
   flowing a high-pressure liquid through an orifice nozzle disposed at the proximal end of the processing head to generate a liquid jet for supply to the central bore, the orifice nozzle defining a first aperture substantially aligned with the central longitudinal axis and fluidly connected to the central bore;
   introducing, via a second aperture, a flow of gas to the central bore, the second aperture located downstream of the orifice nozzle and fluidly connected to the central bore; and
   introducing, via a third aperture, a flow of additive fluid to the central bore, the third aperture located downstream from the second aperture and fluidly connected to the central bore.
22. The method of clause 21, wherein a flow rate of the flow of gas introduced via the second aperture is controlled relative to a flow rate of the liquid jet to induce the flow of gas in a pattern that approximates Couette flow.
23. The method of clause 22, further comprising conducting the flow of gas from the second aperture to an axial channel with a diameter about 10 times to about 30 times larger than a diameter of the liquid jet, thereby inducing the gas to flow at a sufficiently high velocity to form a pattern that approximates the Couette flow between a surface of liquid jet flowing through the axial channel and surrounding stationary walls of the axial channel.
24. The method of clause 21, wherein a flow rate of the additive fluid introduced via the third aperture is about 0.5 liters per minute.
25. The method of clause 21, further comprising introducing the additive fluid to the gas and the liquid jet as a wall film via a conical section of a mixing tube of the high-pressure liquid jet head, the mixing tube located downstream from the first, second and third apertures.
26. The method of clause 25, wherein the additive fluid flows from the third aperture to the conical section around a full diameter of the conical section to join a combined flow of the gas and the liquid jet in a substantially axisymmetric flow pattern.
27. The method of clause 26, wherein the flow of gas is introduced via the second aperture at a sufficiently high velocity to induce Kelvin-Helmholtz instabilities and cause subsequent removal and atomization of droplets of the additive fluid flow from the wall film.
28. The method of clause 25, further comprising mixing the liquid jet, the flow of gas, and the flow of additive fluid in a focusing channel of the mixing tube.
29. The method of clause 21, wherein the flow of gas is introduced via the second aperture at a sufficiently high rate to prevent backflow of the additive fluid toward upstream.
30. The method of clause 21, wherein the additive fluid comprises at least one of a fertilizer, a pesticide, or a fungicide.
31. The method of clause 21, further comprising controlling a flow rate of the additive fluid by manipulating one of: restriction of the flow of gas, an upstream pressure of the flow of gas, a pressure of the flow of the additive fluid, or a pressure of the liquid jet.
32. The method of clause 31, wherein manipulating restriction of the flow of gas into the processing head comprises coupling a flow restriction device to the flow of gas.
33. The method of clause 32, wherein the flow restriction device comprises at least one of a hose of a select length and a select diameter, a pressure regulation apparatus, a valve, or an aperture.
34. The method of clause 32, wherein manipulating the pressure of the of the additive fluid comprises maintaining the additive fluid in an upstream reservoir at atmospheric pressure by adjusting at least one of a size of the liquid jet, a size and shape of an inlet channel of the flow of gas or a size and shape of an inlet channel of the flow of additive fluid.
35. The method of clause 21, wherein the flow of gas via the second aperture and the flow of additive fluid via the third aperture are introduced into the processing head in directions substantially perpendicular to the central longitudinal axis.
36. A fluid mixing insert for a high-pressure liquid jet processing head, the fluid mixing insert comprising:
   a body configured to be disposed within a central bore of the processing head, the body defining a central longitudinal axis extending from a proximal end to a distal end of the body, the body including:
   a central flow channel extending along the central longitudinal axis from the proximal end to the distal end, the central flow channel configured to conduct a liquid jet therethrough;
   a first annular groove disposed substantially circumferentially about the proximal end of the body and shaped to receive a gas flow;
   a plurality of gas introduction apertures fluidly connecting the first annular groove to the central flow channel to introduce the gas flow from the first annular groove to the central flow channel;
   a second annular groove disposed substantially circumferentially about the body downstream from the first annular groove, the second annular groove shaped to receive an additive fluid flow; and
   a plurality of flow regions disposed into the body and in fluid communication with the second annular groove, the plurality of flow regions adapted to complement surfaces of the central bore of the processing head to form a plurality of auxiliary flow channels configured to direct the additive fluid flow longitudinally toward the distal end while substantially separating the additive fluid flow from the liquid jet and the gas flow in the central flow channel.

### BRIEF DESCRIPTION OF THE DRAWINGS

The advantages of the invention described above, together with further advantages, may be better understood by referring to the following description taken in conjunction with the accompanying drawings. The drawings are not necessarily to scale, emphasis instead generally being placed upon illustrating the principles of the invention.
FIG. 1 shows a cross-sectional view of an exemplary additive supply processing head/apparatus for an UHP or HP liquid jet system, according to some embodiments of the present invention.
FIG. 2 shows a detailed view of a portion of the additive supply processing head of FIG. 1 that highlights the flow paths of various fluids as they enter the processing head, according to some embodiments of the present invention.
FIGS. 3a and 3b show perspective and cross-sectional views, respectively, of the fluid mixing insert of the processing head of FIG. 1, according to some embodiments of the present invention.
FIG. 4 shows an exemplary process for mixing fluids within the processing head of FIG. 1, according to some embodiments of the present invention.

### DETAILED DESCRIPTION

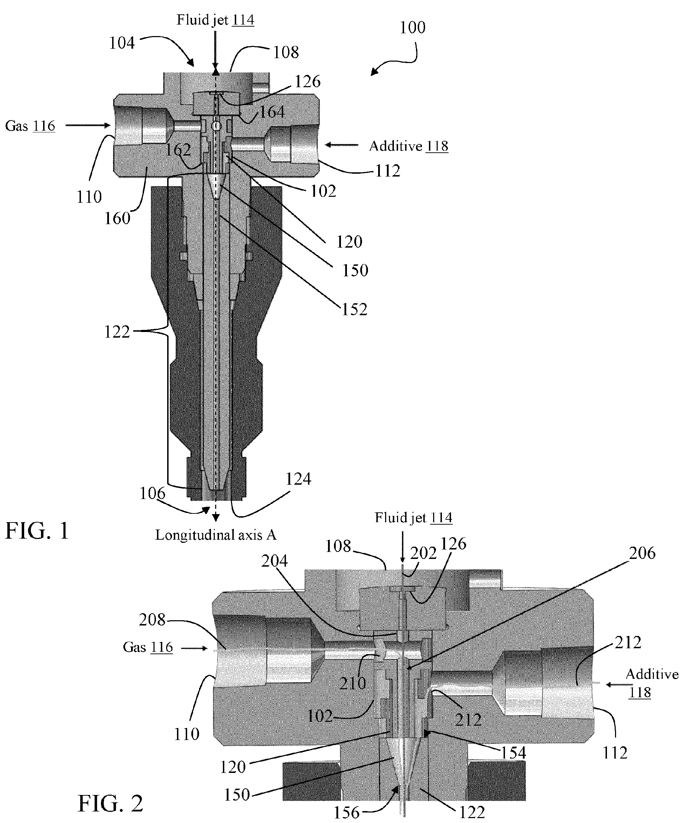

FIG. 1 shows across-sectional view of an exemplary additive supply processing head/apparatus 100 for an UHP or high-pressure (HP) liquid jet system, according to some embodiments of the present invention. As shown, the processing head 100 generally has a body defining a central bore 102 extending along a central longitudinal axis A between a proximal end 104 and a distal end 106 of the processing head 100. The distal end 106 is defined as the end of the processing head 100 that is positioned closest to a workpiece during workpiece processing, and the proximal end 104 is defined as the end that is opposite of the distal end 106 along the longitudinal axis A. The processing head 100 includes a first aperture 108 located at the proximal end 104. The first aperture 108 is substantially aligned with the central longitudinal axis A and fluidly connected (i.e., open) to the central bore 102 to supply a fluid jet 114 to flow longitudinally within the bore 102 of the processing head 100. The processing head 100 also includes a second aperture 110 located downstream from the first aperture 108. The second aperture 110 is disposed on the processing head 100 and fluidly connected to the central bore 102, where the second aperture 110 is configured to supply a flow of at least one gas 116 to the central bore 102 of the processing head 100. The processing head 100 further includes a third aperture 112 disposed on the processing head 100 downstream of the first aperture 108. The third aperture 112 is also fluidly connected to the central bore 102 and configured to supply a flow of at least one additive fluid 118 to the central bore 102 of the processing head 100. The processing head 100 can additionally include a fluid mixing insert 120 disposed within the central bore 102 of the processing head 100 and fluidly connected to the first, second and third apertures 108, 110, 112 for providing a single component to receive three sources of fluids. In addition, a mixing tube 122 is disposed within the central bore 102 downstream of and in fluid communication with the fluid mixing insert 120. The mixing tube 122 is configured to mix the fluids received by the insert 120 and guide ejection of the resulting mixture from an outlet 124 at the distal end 106 of the processing head 100.

FIG. 2 shows a detailed view of a portion of the additive supply processing head 100 of FIG. 1 that highlights the flow paths of various fluids as they enter the processing head 100, according to some embodiments of the present invention. The fluid jet 114 supplied to the processing head 100 via the first aperture 108 may be an UHP water, such as water with a pressure of over about 1000 pounds per square inch (PSI), up to 60,000 or 90,000 PSI (e.g., about 6000 PSI). The gas 116 supplied to the processing head 100 via the second aperture 110 may be air and/or another beneficial gas. The additive fluid 118 supplied to the processing head 100 via the third aperture 112 may be at least one of a fertilizer, a pesticide, or a fungicide. In some embodiments, the additive fluid 118 is a mixture of gases. In some embodiments, a Y-shaped vent fitting (not shown) is coupled to the third aperture 112 to introduce the additive fluid 118 as a liquid along with a certain amount of atmospheric air. Details regarding the Y-shaped vent fitting is provided below. In some embodiments, the fluid mixing insert 120 is employed by the processing head 100 to facilitate the reception of the three fluids 114, 116, 118 to ensure a proper order and/or pattern of mixing within the processing head 100.

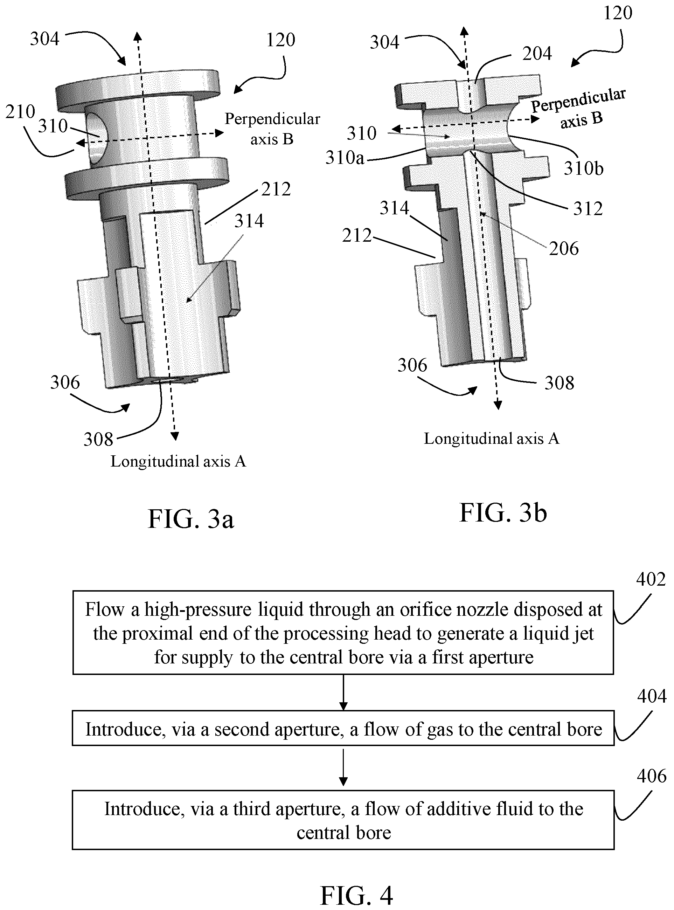

In some embodiments, the UHP fluid jet 114 is supplied to the processing head 100 via the first aperture 108 in a direction 202 substantially colinear with the longitudinal axis A. In some embodiments, an orifice nozzle 126 is located at and/or proximate the first aperture 108 and/or fluidly connected to the first aperture 108, where the orifice nozzle 126 is configured to form the UHP fluid jet 114 by metering and accelerating the fluid jet 114 to generate a high-velocity, UHP fluid jet. In some embodiments, the orifice nozzle 126 is configured to further collimate the fluid jet conducted therethrough. The orifice nozzle 126 then conducts the fluid jet 114 longitudinally toward a corresponding opening 204 of the insert 120, where the insert 120 is positioned downstream from (i.e., distal to) the orifice nozzle 126 along the longitudinal axis A. As shown in FIG. 2, the insert 120 includes an axial flow channel 206 that provides a substantially straight path along the longitudinal axis A for conducting the fluid jet 114 to the mixing tube 122 and subsequently to the outlet 124 of the processing head 100. The insert 120 is described below in detail in relation to FIG. 3.

In some embodiments, the gas 116 is supplied to the processing head 100 via the second aperture 110 in a direction 208 substantially perpendicular to the central longitudinal axis A. The gas flow 116 is adapted to enter the insert 120 via a corresponding annular groove 210 of the insert 120 and join the UHP fluid jet 114 in the central axial flow channel 206 to flow longitudinally toward the mixing tube 122 and the outlet 124. In some embodiments, the annular groove 210 for receiving the gas flow 116 in the insert 120 is downstream from (i.e., distal to) the opening 204 for the fluid jet 114, thus substantially preventing vaporization phase change of the liquid 114. In some embodiments, the axial flow channel 206 is less than about 30 jet diameters in width, where a jet diameter is defined as the diameter of the fluid jet 114 (e.g., about the diameter of the opening through the orifice nozzle 126). In some embodiments, this axial flow channel 206 is on the order of about ten jet diameters in width. This dimension is adapted to induce the gas (e.g., air) 116 to flow at a high velocity in a pattern that approximates Couette flow between the surface of the liquid jet 114 and the surrounding stationary walls of the axial flow channel 206. In some embodiments, the flow rate of the gas 116 introduced via the second aperture 110 is controlled relative to the flow rate of the liquid jet 114 to induce the flow of gas 116 in a pattern that approximates Couette flow. Such high velocity gas flow in this region has the benefit of ensuring that the one or more injected fluids (e.g., fluid jet 114, gas 116 and/or additive 118) is unable to flow backwards (i.e., proximally) into the annular grove 210 and subsequently the aperture 110 for the gas flow 116, which is a flow pattern that degrades cut performance. In general, there is a sufficient longitudinal separation between the entry (i.e., annular groove 210) of the gas 116 and the entry 204 of the injected liquid jet 114 into the axial flow channel 206 to prevent back flow of the injected liquid jet 114 out the gas entry 210.

In some embodiments, the additive fluid 118 is supplied to the processing head 100 via the third aperture 112 in a direction 212 substantially perpendicular to the central longitudinal axis A. In the embodiment of FIG. 2, the flow of the additive 118 is adapted to enter the insert 120 via a corresponding annular groove 212 of the insert 120 after the two fluids 114, 116 are already combined/mixed within the axial flow channel 206. This requires the third aperture 112 (and the corresponding opening 212 of the insert 120) to be located downstream and axially apart from the first and second apertures 108, 110. In some embodiments, the second aperture 110 and the third aperture 112 are axially spaced from one another along the longitudinal axis A by at least about 0.175 inches (e.g., 0.75 inches), where the third aperture 112 is located downstream of the second aperture 110. Alternatively, the third aperture 112 can be located at substantially the same axial location along the longitudinal axis A as the second aperture 110 such that the additive fluid 118 is introduced close to the gas 116 (e.g., substantially simultaneously introduction), which is adapted to reduce the size of the processing head 100. Thus, the additive flow 118 can be introduced substantially simultaneously with or downstream of the gas flow 116.

FIGS. 3a and 3b show perspective and cross-sectional views, respectively, of the fluid mixing insert 120 of the processing head 100 of FIG. 1, according to some embodiments of the present invention. The insert 120 is configured to receive the high-velocity UHP fluid jet 114, the gas flow 116 and the additive flow 118 and provide these fluids to the mixing tube 122 in a specific manner that enhances mixing and cut performance. As shown in FIG. 3b, the axial flow channel 206 is disposed about the central longitudinal axis A of the fluid mixing insert 120 and extends longitudinally between a proximal end 304 and a distal end 306 of the insert 120. In addition, the insert 120 includes a hole 310 cross drilled through the body of the insert 120 at the proximal end 304. The hole 310 is oriented along an axis B substantially perpendicular to the longitudinal axis A. In some embodiments, the hole 310 and the axial flow channel 206 form a T-shaped configuration, with the hole 310 located proximal to the axial flow channel 206 and in fluid communication with the axial flow channel 206 via an intersecting opening 312. In some embodiments, there are sufficient longitudinal separations among the fluid entries 210, 204 and 212 into the insert 120 to prevent back flow of the gas 116 and/or the additive fluid 118.

As shown in FIG. 3b, the opening 204 on the insert 120 for receiving the high-velocity UHP fluid jet 114 from the first aperture 108 is substantially collinear with the central longitudinal axis A, such that the UHP fluid jet 114 flows in a relatively straight path transacting the hole 310. As shown in FIG. 3a, the annular groove 210 of the insert 120 for receiving the air flow 116 from the second aperture 110 is located on an outer diameter of the proximal end 304 of the insert body and disposed circumferentially about the insert body. The annular groove 210 is adapted to form an air flow channel with an interior surface of the central bore 102 of the processing head 100 when the insert 120 is disposed within the central bore 102. In some embodiments, the annular groove 210, which is in fluid connection with the second aperture 110, is dimensioned to meter the flow of gas 116 into the insert 120. Furthermore, the annular groove 210 is in fluid communication with and substantially collinear to the hole 310 via two openings 310a, 310b, such that the hole 310 can conduct the gas flow 116 from the annular groove 210 into the insert 120 in a direction along the perpendicular axis B. As shown in FIG. 3b, the UHP fluid jet 114 from the opening 204 and the gas flow 116 from openings 310a, 310b are adapted to meet within the hole 310, which then provides the fluids to the axial flow channel 206 via the intersecting opening 312. In some embodiments, the mixture of the UHP fluid jet 114 and the gas 116 within the axial flow channel 206 are adapted to be ejected into the downstream mixing tube 122 via an outlet 308 of the axial flow channel 206.

In some embodiments, the insert 120 further includes the annular groove 212 for receiving the additive flow 118, where the annular groove 212 is located on an outer diameter of the insert body and disposed circumferentially about the insert body. The annular groove 212 is adapted to form an additive flow channel with an interior surface of the central bore 102 of the processing head 100 when the insert 120 is disposed within the central bore 102. As explained above, the annular grooves 210 and 212 can be located at substantially the same axial height or spaced apart axially (e.g., with the annular groove 212 for additive flow 118 located downstream from the annular groove 210 for gas flow 116). In some embodiments, the additive flow channel formed by the annular groove 212 is fluidly separated from the air flow channel formed by the annular groove 210, from the hole 310, and/or from the axial flow channel 206.

The insert 120 can further include one or more axial grooves 314 that are disposed into the body of the insert 120 from an outer surface of the insert 120, where each axial groove 314 extends longitudinally between the annular groove 212 for receiving the additive flow 118 and the distal end 306 of the insert 120. Each axial groove 314 is adapted to complement an interior surface of the central bore 102 of the processing head 100 when the insert 120 is disposed within the central bore 102 to form an axial flow channel. In some embodiments, each axial flow channel formed from an axial groove 314 is in fluid communication with the annular additive channel formed by the annular groove 212, but fluidly separated from the air flow channel formed by the annular groove 210, the hole 310, and/or the central axial flow channel 206. Thus, the fluid mixing insert 120 can include the central axial flow channel 206 and one or more axial grooves 314 surrounding the central axial flow channel 206 that are fluidly separated from each other when the insert 120 is disposed within the processing head 100. In operation, each axial flow channel formed from an axial groove 314 can conduct the additive flow 118 longitudinally from the annular groove 212 downstream to the mixing tube 122 without intermingling with (e.g., radially and longitudinally separated from) the mixture of UHP fluid jet 114 and the air flow 116 in the central axial flow channel 206 that is also in fluid communication with the mixing tube 122. In some embodiments, the insert 120 includes multiple ones of the axial grooves 314 spaced radially around the insert 120 at regular intervals to promote radially even additive distribution to the mixing tube 122. Alternatively, the axial grooves 314 are distributed at non-regular intervals or consists of a single groove 314 to promote asymmetric additive distribution. In some embodiments, the annular groove 212, which is in fluid communication with the third aperture 112, is dimensioned to meter the flow of the additive fluid 118 into the one or more axial grooves 314.

Even though the processing head 100 is illustrated with the incorporation of the fluid mixing insert 120, a person of ordinary skill in the art understands that the mixing insert 120 is not required to achieve substantially the same functions described above. That is, features of the mixing insert 120 described above can be directly formed into the body of the processing head 100.

Referring back to FIG. 1, the mixing tube 122 of the processing head 100 can generally comprise two sections - a substantially conical section 150 and a substantially tubular focusing channel 152 located downstream of (i.e., distal to) the conical section 150. FIG. 2 shows the flow paths of the three fluids through the conical section 150 of the mixing tube 122. As shown in FIG. 2, the insert 120 and the mixing tube 122 are radially aligned about the central longitudinal axis A such that the mixture of the UHP fluid jet 114 and gas 116 are ejected from the outlet 308 of the central axial flow channel 206 of the insert 120 and are adapted to enter the proximal end 154 at the conical section 150 of the mixing tube 122 at the center of the conical section 150 (e.g., along the central longitudinal axis A). Meanwhile, the additive flow 118 that is introduced into the insert 120 along the axial grooves 314 of the insert 120, which are radially spaced from the central longitudinal axis A, is adapted to enter the proximal end 154 the conical section 150 of the mixing tube 122 off-centered along a wall edge of the conical section 150.

The conical shape of section 150 is adapted to radially guide the additive fluid 118 to flow inward along its wall as it advances axially forward to centrally mix with the combination of the UHP fluid jet 114 and gas 116 when the additive fluid 118 is near the distal end 156 of the conical section 150. More specifically, the conical shape of section 150 induces the additive flow 118 to flow in a wall film that is gradually brought into radial proximity of the mixture of UHP fluid jet 114 and gas 116 at the center of the conical section 150. As this wall film of additive fluid 118 approaches the UHP fluid jet 114 and gas 116, it enters a region in which the co-flowing gas 116 (e.g., air) has a high enough velocity to induce Kelvin-Helmholtz instabilities and subsequently promotes removal and atomization of droplets from the wall film. Most importantly, the shearing of this wall film of additive fluid 118 into the combined flow of the UHP fluid jet 114 and gas 116 occurs in a manner that does not directly impact and perturb the central fluid jet core of the flow pattern.

In some embodiments, the injected additive fluid 118 is introduced around the full diameter of the conical section 150 at its proximal end 154 so that the additive fluid 118 joins the combined flow 114, 116 in an axis-symmetric manner to maintain uniformity of the combined flow for cutting. This can be accomplished, for example, via multiple ports disposed around a circumference of the conical section 150, a circumferential introduction passage, etc. that are in fluid communication with the axial grooves 314 of the insert 120. Alternatively, the injected additive flow 118 can be introduced predominantly on one side of the conical section 150 in a non-symmetric manner. In some embodiments, the conical section 150 may not be completely circumferential/symmetrical around the central longitudinal axis A or may be an incomplete conical feature to promote the asymmetric flow pattern of the additive fluid introduction into the mixing tube 122.

In some embodiments, once the three fluid streams are centrally met and joined at the distal end 156 of the conical section 150 of the mixing tube 122, they flow through the elongated focusing channel 152 of the mixing tube 122 along the central longitudinal axis A toward the distal end 106 of the processing head 100. The diameter of the focusing channel 152 can be less than about 30 jet diameters wide, such as approximately 10 jet diameters wide. In some embodiments, at least one of the central axial flow channel 206 of the fluid mixing insert 120 or the focusing channel 152 of the mixing tube 122 has a diameter between about 10 times and about 30 times larger than a diameter of the fluid jet 114 (i.e., jet diameter). The length of this focusing channel 152 can be between about 1 inch and about 4 inches. This focusing channel 152 is configured to induce the three fluids to mix to create a substantially heterogeneous mixture and become aligned such that a focused, coherent jet of the mixture exits the processing head 100 via the outlet 124 capable of performing cutting.

In some embodiments, the flow rate of the injected additive fluid 118 into the processing head 100 is precisely controlled. For example, the additive fluid (e.g., fertilizer) 118 can be injected into the processing head 100 via the third aperture 112 at about 0.5 liters per minute. In some embodiments, the flow rate of the injected additive fluid 118 is controlled by two factors: 1) the pressure differential between the point of joining the other fluids and an upstream reservoir (not shown) that holds the injected additive fluid 118, and 2) the size and shape of the flow path between these two locations. This pressure differential is partially dependent on the pressure inside of the mixing area of the cutting head 100. In turn, the pressure inside of the mixing area is controlled by two factors: 1) the size of the orifice (e.g., the UHP hole defined by the orifice) and thus the volume of the UHP fluid used to form the fluid jet 114, and 2) the size and shape of the flow path along which the gas (e.g., air) 116 enters the processing head 100 and combines with the UHP fluid jet 114. This interaction can be understood by considering a case in which the flow volume of the fluid jet 114 is increased, which allows the fluid jet 114 to more effectively accelerate a larger volume of air. The acceleration of this larger volume of air out of the mixing region can cause the pressure to decrease in the mixing region, which, in turn is necessary to continue flowing that larger volume of air through a given size of inlet flow path.

In some embodiments, the pressure of the additive fluid 118 is controlled (e.g., maintaining the upstream reservoir for storing the additive fluid 118 at about atmospheric pressure) by manipulating at least one of the size of the UHP fluid jet 114, the size and shape of the inlet channel/aperture 110 for the gas flow 116, and/or the size and shape of the inlet channel/aperture 112 for the additive flow 118. In some embodiments, the pressure of the additive fluid 118 is controlled by making a suitable flow path modification of the flow of gas 116 outside of the processing head 100 (e.g., such that the upstream reservoir of the injected additive fluid 118 is maintained at about atmospheric pressure). Exemplary flow path modifications include a chosen length of hose at a chosen diameter, a pressure regulation apparatus, a valve, an orifice, or any other suitable flow restriction device coupled to the flow of gas 116. In some other embodiments, the pressure of the additive fluid 118 is controlled by introducing a positive pressure into the processing head 100 via a force provided via one or more of the apertures 108, 110, 112. For example, anhydrous ammonia gas can be introduced as a positive pressure into the processing head 100 through the second aperture 110. In some embodiments, a mixture is introduced along with another input through the aperture 112 for receiving the additive fluid 118 to control the pressure of the additive fluid 118.

In some embodiments the flow rate of the additive fluid 118 is controlled by an upstream adjustable low-pressure pump (not shown) and orifice apparatus (not shown), the combination of which controls the flow of the additive fluid 118 according to demands (e.g., an agricultural demand). Such adjustment/control can be made in substantially real time "on the fly" to accommodate variable rate application demands. In some embodiments, output from the additive fluid pressurized flow rate metering apparatus (i.e., the combination of the pump and the orifice apparatus) is fed into a Y-shaped vent-to-atmosphere fitting (not shown) prior to supplying the output to the processing head 100, such that a vacuum(venturi) effect is created by the fluid jet 114, which does not affect the flow rate applied by the additive fluid pressurized flow rate metering apparatus. This allows for a reliable additive flow rate that is advantageous for accurately applying the additive fluid 118 (e.g., agricultural inputs) at the desired applications rate. In some embodiments, the vent fitting is sized such that the venturi effect is not seen by the incoming fluid. The resulting flow into the additive fluid 118 becomes a mixture of atmospheric air and the additive fluid to a varying degree. In some embodiments, the atmospheric air is filtered appropriately to desired conditions to maintain processing head cleanliness and functions, thereby preventing contaminant buildup which in turn prevents the flow paths from performing correctly and reduces resulting jet cutting performance. In some embodiments, the atmospheric air of the vent fitting is replaced by or accompanied with a metered beneficial gas. The backflow of fluid and or/flow rate of gas(es) into the vent fitting can be monitored such that a sensor/visual/audible cue is triggered to alert of any potential flow issues to be diagnosed.

In some embodiments, a set of sensors are included within the processing head 100 to detect one or more of flows, clogs, temperatures, blown orifices, etc. In some embodiments, a housing surrounding the mixing tube 122 (e.g., surrounding the focusing channel 152 of the mixing tube 122) is provided to protect the mixing tube 122, including the focusing channel 152, from field materials, such as rocks, dirt, debris, etc., which may damage the mixing tube 122 and/or affect alignment.

As explained above, to correctly combine the three fluid streams 114, 116, 118 within the processing head 100, the present invention provides specific components to support the specific flow paths within the processing head 100. In another aspect, the invention features a set of multiple parts (e.g., four parts) for assembling the processing head 100 to produce these flow paths in a way that is economical and easy to install. The first part can comprise the orifice nozzle 126 located at the first aperture 108 and/or fluidly connected to the first aperture 108. The orifice nozzle 126 is configured to receive the UHP fluid jet 114 to generate a collimated, high-velocity UHP fluid jet. The second part can comprise the insert 120 as illustrated in FIG. 3 that introduces the three fluids into the processing head 100 in the correct order and locations. The third part can comprise the mixing tube 122 including (i) the conical section for receiving the injected additive fluid 118 at the outer edge and guiding it radially inward to meet the combined flow of UHP fluid jet 114 and gas 116 at the center, and (ii) the narrow central flow/focusing channel 152 through which the three fluids 114, 116, 118 from the conical section 150 further mix to produce a substantially heterogenous mixture. The fourth part can be a cross-shaped body 160 for encapsulating the first, second and third parts comprising the orifice nozzle 126, the fluid mixing insert 120, and the mixing tube 122, respectively, into a single assembly. More specifically, as shown in FIG. 1, the body 160 defines the central bore 102 that is stepped in configuration for engaging, spacing and orienting the orifice nozzle 126, the fluid mixing insert 120 and the mixing tube 122 relative to each other within the body. The body 160 also includes suitable connections and channels to supply the three fluids 114, 116, 118 to the central bore 102. In some embodiments, the assembly can have fewer than four parts. For example, the mixing tube 122 and/or insert 120 can be integrally constructed with the body 160 to reduce the part count.

During assembly, the insert 120 is disposed within the central bore 102 of the body 160 from the proximal end 108 until the insert 120 axially encounters and rests on a step 162 within the bore 102 that prevents its further advancement within the bore 102. The orifice nozzle 126 can then be disposed into the central bore 102 of the body 160 from the proximal end 108 until the orifice nozzle 126 axially encounters and rests on another step 164 within the bore 102. Therefore, the insert 120 is located downstream from the orifice nozzle 126 within the body 160, both of which are axially positioned by respective steps 162, 164 in the central bore 102 of the body 160. The mixing tube 122 can then slide into the central bore 102 of the body 160 from the distal end 106 of the body 160 until the mixing tube 122 encounters the distal end 306 of the insert 120 within the bore 102. In some embodiments, the mixing tube 122 can be held in place within the body 160 by one or more screws (not shown).

In some embodiments, one or more parts (e.g., the body 160 and/or the insert 120) are not axisymmetric. This has the potential of introducing errors during assembly if the non-symmetric features are not correctly aligned to one another. This challenge may be overcome by the inclusion of the annular grooves 210, 212 that are machined into the outer surfaces of the insert 120. The annular groove 210 is circumferentially oriented on the insert 120 to receive the injected gas 116 via the second aperture 110 of the body 160. The annular groove 212 is circumferentially oriented on the insert 120 to receive the injected additive 118 via the third aperture 112 of the body 160. Thus, the overall assembly performs optimally no matter what rotational orientation the insert 120 is assembled relative to the body 160. Furthermore, these annular grooves 210, 212 are formed by machining into the outer surface of the insert 120, which are far more economical than machining annular grooves in the central bore 102 of the body 106.

FIG. 4 shows an exemplary process 400 for mixing fluids within the processing head 100 of FIG. 1, according to some embodiments of the present invention. At step 402 of process 400, an UHP fluid (e.g., water) is provided through the orifice nozzle 126 of the processing head 100 via the first aperture 108 of the processing head 100 to produce an UHP fluid jet 114 (step 402). The first aperture 108 and the orifice nozzle 126 are substantially aligned with the central longitudinal axis A and fluidly connected to the central bore 102 of the processing head 100, such that the UHP fluid jet 114 is conducted longitudinally through the processing head 102.

At step 404, a flow of gas (e.g., air) 116 is introduced to the central bore 102 of the processing head 100 via the second aperture 110, which is located downstream of the orifice nozzle 126 and fluidly connected to the central bore 102. The flow of gas 116 can be introduced in a direction substantially perpendicular to the central longitudinal axis A. In some embodiments, the flow rate of the flow of gas 116 introduced via the second aperture 110 is controlled relative to the flow rate of the liquid jet 114 via the first aperture 108 to induce the flow of gas 116 in a pattern that approximates Couette flow. The Couette flow pattern can also be produced by conducting the flow of gas 116 from the second aperture 110 to the central axis flow channel 206 (of the insert 120) that has a diameter about 10 times to about 30 times larger than a diameter of the liquid jet 114, thereby inducing the gas 116 to flow at a sufficiently high velocity to generate the Couette flow pattern.

At step 406, a flow of additive fluid 118 is introduced to the central bore 102 of the processing head 100 via the third aperture 112, which is located downstream from the second aperture 110 and fluidly connected to the central bore 102. The flow of additive fluid 118 can be introduced in a direction substantially perpendicular to the central longitudinal axis A. The flow rate of the additive fluid 118 introduced via the third aperture 112 can be about 0.5 liters per minute. In some embodiments, the high-velocity gas flow 116 via the second aperture 110 as described above is adapted to prevent backflow of the additive fluid toward upstream. In some embodiments, the flow rate of the additive fluid 118 supplied to the processing head 100 can be manipulated by one of restriction of the flow of gas 116 via the second aperture 110 (e.g., coupling a flow restriction device to the flow of gas 116 in the form of, for example, a hose of a select length and a select diameter, a pressure regulation apparatus, a valve, and/or an aperture), manipulating the upstream pressure of the flow of gas 116 via the second aperture 110, manipulating the pressure of the flow of additive fluid 118 via the third aperture 112, or manipulating the pressure of the flow of fluid jet 114 via the first aperture 108. Manipulating the pressure of the flow of additive fluid 118 can involve maintaining the additive fluid 118 in an upstream reservoir at atmospheric pressure by adjusting at least one of the size of the liquid jet 114, the size and shape of an inlet channel (e.g., the second aperture 110) for receiving the flow of gas 116 or the size and shape of an inlet channel (e.g., the third aperture 112) for receiving the flow of additive fluid 118.

In some embodiments, once the three fluids enter the processing head 100 via their respective apertures, the fluids are adapted to flow into an insert 120 disposed in the central bore 102 of the processing head 100. In particular, the insert 120 defines an annular groove 210 for receiving the flow of gas 116 via the second aperture 110 and guiding the flow of gas 116 into a central flow channel 206 of the insert 120. The insert 120 also defines a proximal opening 204 in fluid communication with the first aperture 108 for receiving the UHP fluid jet 114 and guiding the flow of UHP fluid jet 114 into the central flow channel 206. Thus, the UHP fluid jet 114 and the gas 116 are adapted to mix within the central flow channel 206 of the insert 120 and flow longitudinally through the insert 120. The insert 120 can further define another annular groove 212 (downstream from the fist annular grove 210) for receiving the flow of additive fluid 118 via the third aperture 112 and guiding the additive fluid 118 to flow longitudinally through a set of one or more axial flow regions 314 surrounding the central flow channel 206, but fluidly isolated from the mixture of fluid jet 114 and gas 116 in the central flow channel 206. The mixture of fluid jet 114 and gas 116 is adapted to exit the insert 120 centrally via the distal outlet 308 of the central flow channel 206, while the additive fluid 118 is adapted to exit the insert 120 via openings radially surrounding the central distal outlet 308.

In some embodiments, once the three fluids leave the insert 120 within the processing head 100, the fluids are introduced to the mixing tube 122 located downstream from the insert 120 within the central bore 102 of the processing head 100. In particular, the additive fluid 118 is adapted to flow from the axial flow regions 314 of the insert 120 into an edge/wall of the conical section 150 of the mixing tube 122, while the mixture of fluid jet 114 and gas 116 is adapted to flow from the central flow channel 206 of the insert 120 into the center of the conical section 150. Then the additive fluid 118 is adapted to flow as a wall film in the conical section 150 in a substantially axisymmetric flow pattern to finally join the mixture of fluid jet 114 and gas 116 at the distal end 156 of the conical section 150. In some embodiments, the flow of gas 116 is at a sufficiently high velocity to induce Kelvin-Helmholtz instabilities and cause subsequent removal and atomization of droplets of the additive fluid flow 118 from the wall film in the conical section 150.

In some embodiments, the combination of the three fluids at the distal end 156 of the conical section 150 of the mixing tube 122 is adapted to flow longitudinally through the focusing channel 152 of the mixing tube 122. The focusing channel 152 is configured to further mix the three fluids to produce a substantially heterogenous mixture and eject the mixture from the processing head via the distal opening 124 of the processing head 100.

In general, the present invention incorporates a gas flow 116 to improve mixing and entrainment of a secondary additive fluid 118 into a high velocity liquid j et 114 within a processing/cutting head 100. The present invention features designs, methods, and components configured to promote at least one of (i) separation of mixing locations of gas 116 and injected additive 118 within a processing head 100 to prevent back flow of the injected additive 118, (ii) introduction of injected additive 118 as a wall film (e.g., along the wall of a conical section 150 of the mixing tube 122); and/or (iii) control of inlet restriction of the gas flow 116 to achieve the correct flow rate/pressure of the additive flow 118 while maintaining an upstream reservoir of the additive at about atmospheric pressure. In addition, the fluid mixing insert 120 of the present invention allows controlled introduction of the gas 116 and/or the additive 118 into the UHP fluid jet 114 via components that are economical to manufacture and easy to assembly. It also allows the gas 116 and/or the additive 118 to mix with the UHP fluid jet 114 while minimizing degradation of its cutting ability.

## Claims

1. An additive supply apparatus for a high-pressure liquid jet system, the additive supply apparatus comprising:
a processing head including a central bore extending along a central longitudinal axis of the processing head from a proximal end to a distal end;
a first aperture disposed on the processing head at the proximal end, the first aperture substantially aligned with the central longitudinal axis and fluidly connected to the central bore to supply a fluid jet to flow longitudinally within the processing head;
a second aperture disposed on the process head and fluidly connected to the central bore, the second aperture configured to supply a flow of gas to the processing head;
a third aperture disposed on the processing head and fluidly connected to the central bore, the third aperture configured to supply a flow of an additive fluid to the processing head;
a fluid mixing insert disposed within the central bore and fluidly connected to the first, second and third apertures; and
a mixing tube disposed within the central bore in fluid communication with and downstream from the fluid mixing insert.

2. The additive supply apparatus of claim 1, wherein the additive fluid comprises at least one of a fertilizer, a pesticide, or a fungicide.

3. The additive supply apparatus of claim 1, wherein the gas comprises air.

4. The additive supply apparatus of claim 1, wherein the fluid jet comprises water conducted at a high velocity.

5. The additive supply apparatus of claim 1, wherein at least one of the second aperture or the third aperture is configured to conduct the corresponding gas or additive fluid in a direction substantially perpendicular to the central longitudinal axis.

6. The additive supply apparatus of claim 1, wherein the mixing tube defines a substantially conical section and a substantially tubular focusing channel, the substantially conical section located upstream from the focusing channel and configured to radially guide the additive fluid to flow inward to mix with a combination of the liquid jet and the gas.

7. The additive supply apparatus of claim 6, wherein any one or more of the following applies,
a) the conical section is shaped to induce the additive fluid to flow as a wall film as the additive fluid approaches the liquid jet and the gas;
b) the conical section is not completely circumferential around the central longitudinal axis;
c) the focusing channel is configured to mix the liquid jet, the gas, and the additive fluid to create a substantially heterogeneous mixture;
d) a diameter of the focusing channel is between about 10 times and about 30 times larger than a diameter of the liquid jet; and
e) the focusing channel is between about 1 inch and about 4 inches in length.

8. The additive supply apparatus of claim 6, wherein the fluid mixing insert includes a central flow channel and a plurality of axial flow regions surrounding the central flow channel, the central flow channel configured to conduct the combination of the liquid jet and the gas longitudinally toward the mixing tube, wherein optionally any one or more of the following applies,
a) the axial flow regions of the fluid mixing insert are adapted to complement surfaces of the central bore of the processing head to form a plurality of auxiliary flow channels configured to direct the additive fluid to flow longitudinally toward the conical section of the mixing tube while separating the combination of the additive fluid from the liquid jet and the gas flow in the central flow channel;
b) the fluid mixing insert further includes (i) a first annular groove fluidly connected to the second aperture and configured to meter the flow of gas into the central flow channel, and (ii) a second annular groove fluidly connected to the third aperture and configured to meter the flow of the additive fluid into the plurality of axial flow regions; and
c) at least one of the central flow channel of the fluid mixing insert or the focusing channel of the mixing tube has a diameter between about 10 times and about 30 times larger than a diameter of the liquid jet.

9. The additive supply apparatus of claim 1, wherein the second aperture and the third aperture are axially spaced from one another along the longitudinal axis by at least about 0.175 inches, and wherein the third aperture is located downstream of the second aperture.

10. The additive supply apparatus of claim 1, further comprising a body for encapsulating the fluid mixing insert, the mixing tube and an orifice nozzle into a single assembly, wherein the body defines the central bore, wherein optionally
a) the central bore of the body is stepped in configuration for engaging, spacing and orienting the fluid mixing insert, the mixing tube and an orifice nozzle relative to each other within the body; and/or
b) the orifice nozzle is fluidly connected to the first aperture and configured to convert a flow of high-pressure liquid into the fluid jet with a high velocity, wherein optionally the high velocity fluid jet is collimated.

11. A method of mixing fluids within a high-pressure liquid jet processing head comprising a central bore extending along a central longitudinal axis of the processing head from a proximal end to a distal end, the method comprising:
flowing a high-pressure liquid through an orifice nozzle disposed at the proximal end of the processing head to generate a liquid jet for supply to the central bore, the orifice nozzle defining a first aperture substantially aligned with the central longitudinal axis and fluidly connected to the central bore;
introducing, via a second aperture, a flow of gas to the central bore, the second aperture located downstream of the orifice nozzle and fluidly connected to the central bore; and
introducing, via a third aperture, a flow of additive fluid to the central bore, the third aperture located downstream from the second aperture and fluidly connected to the central bore.

12. The method of claim 11, wherein any one or more of the following applies,
a) a flow rate of the flow of gas introduced via the second aperture is controlled relative to a flow rate of the liquid jet to induce the flow of gas in a pattern that approximates Couette flow, the method optionally further comprising conducting the flow of gas from the second aperture to an axial channel with a diameter about 10 times to about 30 times larger than a diameter of the liquid jet, thereby inducing the gas to flow at a sufficiently high velocity to form a pattern that approximates the Couette flow between a surface of liquid jet flowing through the axial channel and surrounding stationary walls of the axial channel;
b) a flow rate of the additive fluid introduced via the third aperture is about 0.5 liters per minute;
c) the flow of gas is introduced via the second aperture at a sufficiently high rate to prevent backflow of the additive fluid toward upstream;
d) the additive fluid comprises at least one of a fertilizer, a pesticide, or a fungicide; and
e) the flow of gas via the second aperture and the flow of additive fluid via the third aperture are introduced into the processing head in directions substantially perpendicular to the central longitudinal axis.

13. The method of claim 11, further comprising introducing the additive fluid to the gas and the liquid jet as a wall film via a conical section of a mixing tube of the high-pressure liquid jet head, the mixing tube located downstream from the first, second and third apertures, wherein optionally
a) the additive fluid flows from the third aperture to the conical section around a full diameter of the conical section to join a combined flow of the gas and the liquid jet in a substantially axisymmetric flow pattern, wherein optionally the flow of gas is introduced via the second aperture at a sufficiently high velocity to induce Kelvin-Helmholtz instabilities and cause subsequent removal and atomization of droplets of the additive fluid flow from the wall film; and/or
b) the method further comprising mixing the liquid jet, the flow of gas, and the flow of additive fluid in a focusing channel of the mixing tube.

14. The method of claim 11, further comprising controlling a flow rate of the additive fluid by manipulating one of: restriction of the flow of gas, an upstream pressure of the flow of gas, a pressure of the flow of the additive fluid, or a pressure of the liquid jet, wherein optionally manipulating restriction of the flow of gas into the processing head comprises coupling a flow restriction device to the flow of gas, wherein optionally
a) the flow restriction device comprises at least one of a hose of a select length and a select diameter, a pressure regulation apparatus, a valve, or an aperture; and/or
b) manipulating the pressure of the of the additive fluid comprises maintaining the additive fluid in an upstream reservoir at atmospheric pressure by adjusting at least one of a size of the liquid jet, a size and shape of an inlet channel of the flow of gas or a size and shape of an inlet channel of the flow of additive fluid.

15. A fluid mixing insert for a high-pressure liquid jet processing head, the fluid mixing insert comprising:
a body configured to be disposed within a central bore of the processing head, the body defining a central longitudinal axis extending from a proximal end to a distal end of the body, the body including:
a central flow channel extending along the central longitudinal axis from the proximal end to the distal end, the central flow channel configured to conduct a liquid jet therethrough;
a first annular groove disposed substantially circumferentially about the proximal end of the body and shaped to receive a gas flow;
a plurality of gas introduction apertures fluidly connecting the first annular groove to the central flow channel to introduce the gas flow from the first annular groove to the central flow channel;
a second annular groove disposed substantially circumferentially about the body downstream from the first annular groove, the second annular groove shaped to receive an additive fluid flow; and
a plurality of flow regions disposed into the body and in fluid communication with the second annular groove, the plurality of flow regions adapted to complement surfaces of the central bore of the processing head to form a plurality of auxiliary flow channels configured to direct the additive fluid flow longitudinally toward the distal end while substantially separating the additive fluid flow from the liquid jet and the gas flow in the central flow channel.
